# EUROPÄISCHE PATENTSCHRIFT

(11) **EP 2 707 702 B1**
(45) Veröffentlichungstag und Bekanntmachung des Hinweises auf die Patenterteilung: **03.06.2020**
(21) Anmeldenummer: 12716395.4
(22) Anmeldetag: 19.04.2012
(51) Int. Cl.: G01N 21/88, G01N 21/95, F03D 17/00, G06T 7/70

(54) **BEFUNDUNG VON ROTORBLÄTTERN**
ASSESSMENT OF ROTOR BLADES
EXAMEN DE PALES DE ROTOR

(30) Priorität: 11.05.2011 DE 102011075675
(43) Veröffentlichungstag der Anmeldung: 19.03.2014
(73) Patentinhaber: Wobben Properties GmbH, 26607 Aurich (DE)
(72) Erfinder: JANSEN, Gerhard, 49757 Vrees (DE)
(74) Vertreter: Eisenführ Speiser
(86) Internationale Anmeldenummer: PCT/EP2012/057188
(87) Internationale Veröffentlichungsnummer: WO 2012/152561

(56) Entgegenhaltungen:
- EP-A2- 2 218 912
- WO-A1-2010/051278
- JP-A- H05 322 778
- US-A1- 2008 141 778
- US-A1- 2011 138 937

## Beschreibung

Die vorliegende Erfindung betrifft ein Verfahren zur Befundung einer Windenergieanlage, insbesondere zur Befundung von Rotorblättern einer Windenergieanlage sowie eine entsprechende Vorrichtung zur Befundung.

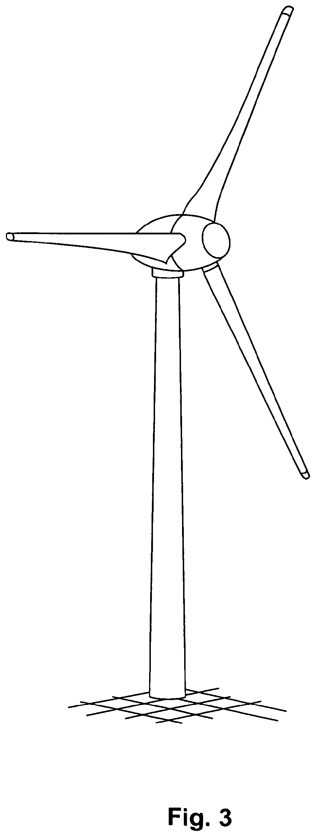

Insbesondere betrifft die vorliegende Erfindung die Befundung einer Horizontalachsen-Windenergieanlage, mit einem Turm und einer Gondel mit Rotor und Rotornabe mit mehreren Rotorblättern, wie in der Figur 3 dargestellt ist.

Rotorblätter einer Windenergieanlage können heutzutage Längen von bis zu 60m aufweisen und sind dabei wechselnden Windlasten und mitunter auch Sturm ausgesetzt. Hierbei treten erhebliche Belastungen auf und insbesondere Rotorblätter die ganz oder teilweise aus einem Faserverbundwerkstoff hergestellt sind wie beispielsweise Glasfasermaterialien können insbesondere durch solche Überbelastungen beschädigt werden. Solche Beschädigungen sind beispielsweise durch Rissbildungen erkennbar. Es ist wichtig, solche Rissbildungen oder andere Beschädigungsanzeichen frühzeitig zu erkennen, um größere Schäden zu vermeiden, indem das Rotorblatt getauscht oder falls möglich repariert wird.

Aus diesem Grunde kann eine regelmäßige Untersuchung von Rotorblättern auf etwaige Anzeichen von Beschädigungen sinnvoll sein. Solche Untersuchungen werden auch als Befundungen bezeichnet. Grundsätzlich können solche Befundungen auch an anderen Elementen einer Windenergieanlage ausgeführt werden, wie beispielsweise am Turm oder der Gondel. Zur Befundung von Rotorblättern wird häufig so vorgegangen, dass die Windenergieanlage angehalten wird und mittels Geräten wie Hubsteigern, Arbeitsbühnen oder Abseilern die Oberflächen der Rotorblätter untersucht werden. Solche Untersuchungen sind zeit- und kostenaufwendig und durch die beschriebenen Höhenarbeiten besteht zudem ein Risiko für die Servicemitarbeiter, die diese Untersuchungen, nämlich Befundungen durchführen, nämlich eine Risiko durch Höhenarbeiten.

Als Stand der Technik wird an dieser Stelle allgemein auf folgende Dokumente hingewiesen: DE 10 2006 032 387 A1, DE 103 23 139 A1, DE 10 2008 053 928 A1, DE 10 2009 009 272 A1 sowie WO 2010/051 278 A1.

Unter anderem ist aus WO 2010/051278 A1 ein Verfahren zum Inspizieren einer Windenergieanlage, insbesondere eines Rotorblattes, unter Verwendung eines ferngesteuerten Fahrzeuges bekannt, das mit einer Kamera ausgerüstet ist. Mit Hilfe des ferngesteuerten Fahrzeuges wird die Kamera auf einen zu inspizierenden Bereich des Rotorflügels gerichtet, sodass ein Foto des zu inspizierenden Bereiches aufgenommen werden kann. Die Position des Fahrzeuges relativ zum Rotorblatt wird mit Hilfe von GPS-Signalen gehalten.

EP 2 218 912 A2 offenbart ein Verfahren und eine Vorrichtung zur Überprüfung der Herstellungsqualität eines Rotorblattes für Windenergieanlagen. Auf die Oberfläche des Rotorblattes wird eine Lichtquelle zum Ausgeben von Licht gerichtet, wobei über das reflektierte Licht ein Tiefenprofil einer unterhalb der Oberfläche des Rotorblattes verlaufenden Fasermatte erstellt werden soll.

Des Weiteren offenbart US 2008/141778 A1 ein Verfahren zum zerstörungsfreien Prüfen von z.B. einem Rotorflügel einer Windenergieanlage. Das zu untersuchende Rotorblatt wird zuvor aufwendig vermessen, um dessen Geometrie zu bestimmen. Anschließend wird eine Prüfsonde entlang des Rotorflügels bewegt, um die Struktur auf Schäden zu untersuchen. Mit Hilfe einer Positioniereinrichtung wird die Bewegung der Prüfsonde entlang des Rotorblattes aufgenommen. Dadurch ist eine Kopplung zwischen den mit der Prüfsonde aufgenommenen Messdaten und der Position der Prüfsonde zum Rotorblatt möglich, wobei aus den erfassten Positionsdaten der Prüfsonde die zugeordnete Position am Werkstück errechnet wird.

Der vorliegenden Erfindung liegt die Aufgabe zugrunde, wenigstens eines der oben beschriebenen Probleme zu beheben oder zu verringern. Insbesondere soll eine Möglichkeit zur verbesserten Befundung von Windenergieanlage, insbesondere Rotorblättern davon vorgeschlagen werden, das kostengünstiger als bisherige Lösungen ist und möglichst ein Arbeitsrisiko für Servicepersonal verringert, das eine solche Befundung durchführt, zumindest soll eine alternative Lösung vorgeschlagen werden.

Erfindungsgemäß wird ein Verfahren gemäß Anspruch 1 vorgeschlagen. Ein solches Verfahren ist dazu vorbereitet, eine Windenergieanlage oder einen Teil davon insbesondere ein Rotorblatt bzw. mehrere nacheinander optisch zu befunden, nämlich optisch auf etwaige Schäden oder Ansätze von Schäden oder Hinweise von Schäden zu untersuchen. Demnach wird eine Kamera verwendet, die insbesondere eine hochauflösende Digitalkamera ist. Ebenso kommen sogenannte Webcams oder Spezialkameras in Betracht. Vorzugsweise werden Fotokameras vorgeschlagen, es können aber auch Filmkameras verwendet werden. Eine solche Kamera wird auf einen zu befundenden Bereich, also auf einen Bereich der Windenergieanlage, insbesondere auf einen Bereich des Rotorblattes ausgerichtet. Von diesem Bereich wird ein Foto mit der Kamera aufgenommen. Das so aufgenommene Foto kann vor Ort oder später ausgewertet und/oder archiviert werden. Anhand des Fotos ist nun eine optische Befundung des zu befundenen Bereiches möglich. Insbesondere kann mit Hilfe eines solchen Fotos eine Rissbildung erkannt werden bzw. der zu befundende Bereich auf eine Rissbildung hin untersucht werden. Anstelle eines Fotos könnte auch eine Filmsequenz aufgenommen werden.

Zu dem zu befundenden Bereich, bzw. befundetem Bereich, also zu dem fotografierten Bereich, wird zudem die Position an dem Rotorblatt erfasst, und dem fotografierten Bereich und damit dem jeweils befundeten Bereich zugeordnet. Um das Rotorblatt, oder den anderen Bereich der Windenergieanlage, vollständig zu befunden, ist der beschriebene Vorgang sukzessive für alle zu untersuchenden Bereiche des jeweiligen Teils, also beispielsweise des Rotorblattes, zu wiederholen. Dabei wird zu jedem befundeten und damit fotografierten Bereich jeweils eine Position erfasst und zugeordnet, so dass auch eine Dokumentation des Befundungsergebnisses für das Rotorblatt vorgenommen werden kann.

Vorzugsweise ist die Kamera mit einer Teleskopoptik, insbesondere mit einem Teleskop, ausgestattet und zum Aufnehmen eines Fotos des zu befundenden Bereiches wird dieser Bereich optisch vergrößert, um dadurch ein möglichst hochauflösendes Foto zu erhalten.

Durch die Verwendung einer Teleskopoptik insbesondere im Zusammenhang mit einer hochauflösenden Digitalkamera ist eine qualitativ hochwertige optische Befundung des jeweiligen Bereiches vom Boden aus möglich, so dass eine Höhenarbeit, also eine Arbeit mittels Hebebühnen, Plattformen, Abseilern oder dergleichen am Rotorblatt bzw. anderen Bereichen der Windenergieanlage vermieden werden kann.

Vorzugsweise wird ein Rotorblatt einer sogenannten Horizontalachsenwindenergieanlage befundet, dass eine Rotorblattwurzel und eine Rotorblattspitze aufweist. Die Rotorblattwurzel ist der Teil des Rotorblattes der an der Rotornabe befestigt ist, und die Rotorblattspitze ist der von der Nabe abgewandte Teil des Rotorblattes.

Hierbei werden das Rotorblatt und die Kamera vorzugsweise so zueinander ausgerichtet, dass sich zwischen Kamera und Rotorblattwurzel einerseits und Kamera und Rotorblattspitze andererseits der gleiche Abstand einstellt bzw. dass sich eine Längsachse des Rotorblattes, also eine Achse von der Rotorblattwurzel zur Rotorblattspitze senkrecht zu einer optischen Achse einstellt, nämlich einer optischen Achse die die Kamera mit einem mittleren Bereich des Rotorblattes verbindet. Befindet sich die Kamera in einem ausreichend großen Abstand zum Rotorblatt, was meist schon dann der Fall sein kann, wenn sich die Kamera in der Nähe der Windenergieanlage am Boden befindet, ist im Grunde der Abstand von der Kamera zu jedem Bereich des Rotorblattes in etwa konstant. Vorzugsweise ist die Kamera zumindest aber ein Kamerastativ auf dem Erdboden anzuordnen, um besagte Höhenarbeit zu vermeiden. Die besagte Anordnung des Rotorblattes zur Kamera kann beispielsweise so erfolgen, dass die Windenergieanlage so abgeschaltet wird, dass das Rotorblatt in einer entsprechenden gewünschten Position zur Kamera stehen bleibt. Je nach Platz am Boden im Bereich der Windenergieanlage kann die beschriebene Ausrichtung zwischen Rotorblatt und Kamera auch durch eine entsprechende Aufstellung der Kamera erfolgen.

Gemäß einer Ausgestaltung wird vorgeschlagen, dass zum Ermitteln der Position des fotografierten Bereiches eine Projektionsvorrichtung mit einer Projektionsfläche verwendet wird. Diese Projektionsvorrichtung ist so ausgebildet, dass durch die Ausrichtung der Kamera eine zum befundeten Bereich korrespondierende Position auf die Projektionsfläche projiziert wird. Das Ausrichten der Kamera erfolgt hier dadurch, dass die Kamera als solche oder zumindest ein Teil davon zur Ausrichtung auf den zu befundenden Bereich bewegt wird und nach der Ausrichtung eine entsprechende, ausgerichtete Position annimmt. Diese ausgerichtete Position wird auf die Projektionsfläche der Projektionsvorrichtung projiziert.

Vorzugsweise erfolgt eine Projektion mittels eines Leuchtmittels an der Kamera. Dieses Leuchtmittel kann beispielsweise ein Laserpointer oder dergleichen sein. Insbesondere sollte eine möglichst wenig streuende Lichtquelle verwendet werden, so dass zu jeder Ausrichtung der Kamera ein Lichtpunkt oder zumindest Lichtfleck auf der Projektionsfläche eine Position angibt, die zu dem jeweils zu befundenden bzw. befundeten Bereich korrespondiert.

Mit anderen Worten ist die Projektionsvorrichtung so ausgebildet, dass sich beim kontinuierlichen Abtasten einer Silhouette des Rotorblattes - das ist hier nur zur Illustration erläutert - ein insbesondere verkleinertes Abbild auf der Projektionsfläche ergibt, wenn die korrespondierende Bewegung des Lichtpunktes oder Lichtfleckes des Leuchtmittels nachgezeichnet würde. Durch eine starre Verbindung des Leuchtmittels mit der auszurichtenden Kamera kann jede Ausrichtung leicht auf der Projektionsfläche eingezeichnet und dokumentiert werden. Die Projektionsfläche kann beispielsweise ein Zeichenblatt eines Flipcharts sein, und jede Position wird dann per Hand auf diesen Flipchart entsprechend des jeweils auftretenden Leuchtpunktes oder Leuchtflecks eingezeichnet. Ebenso kann als Projektionsfläche ein Messaufnehmer vorgesehen sein, der die jeweilige Position automatisiert erfasst. Bei einer automatisierten Erfassung kommt auch eine anderweitige Bestimmung der Ausrichtung der Kamera in Betracht, wie beispielsweise durch einen Drehratensensor. Die bevorzugte Verwendung einer manuell zu beschriftenden Projektionsfläche ist jedoch einfach, kostengünstig und zweckmäßig.

Um die jeweils auf der Projektionsfläche aufgezeichneten Positionen der befundeten Bereiche Positionen auf dem Rotorblatt zuordnen zu können, kann das Rotorblatt beispielsweise in seiner Silhouette oder in einigen Eckpunkten auf der Projektionsfläche verkleinert eingezeichnet werden. Insbesondere die Position der Rotorblattspitze und des Wurzelbereichs, insbesondere konkret des Flansches zur Befestigung an der Rotornabe aufgenommen hierzu zur Orientierung in Betracht. Hierzu kann die Kamera zur Rotorblattspitze und anschließend zum Flansch des Rotorblattes ausgerichtet werden, wobei jeweils der entsprechende Punkt auf der Projektionsfläche eingezeichnet wird. Aufgrund wenigstens dieser beiden Eckpunkte ist dann eine Skalierung über die Kenntnis der Rotorblattmaße, insbesondere der Rotorblattlänge möglich.

Vorzugsweise wird vorgeschlagen, eine Rotorblattskalierung auf einem elastischen Band wie einem Gummiband vorzusehen. Wenn auf dem Rotorblatt also eine Skalierung des bekannten Rotorblattes eingetragen ist, braucht das elastische Band nur noch so gestreckt zu werden, dass es den gerade eingezeichneten Punkt der Rotorblattspitze mit dem eingezeichneten Punkt des Flansches des Rotorblattes verbindet. Hierbei wird die Skalierung auf dem elastischen Band gleichmäßig gestreckt und braucht dann nur noch auf die Projektionsfläche übertragen zu werden. Ebenso kann - sofern das erforderlich ist - auch eine Skalierung in Querrichtung des Rotorblattes vorgenommen werden.

Erfindungsgemäß wird zudem eine Befundungsvorrichtung gemäß Anspruch 9 vorgeschlagen. Diese Befundungsvorrichtung ist dazu vorbereitet, ein Rotorblatt einer Windenergieanlage optisch zu befunden. Grundsätzlich kommt hiermit auch eine Befundung anderer Elemente wie des Turmes oder der Gondel der Windenergieanlage in Betracht.

Die Befundungsvorrichtung weist eine Kamera zum Aufnehmen jeweils eines Fotos eines zu befundenden Bereiches des Rotorblattes auf. Mit der Kamera ist eine Ausrichtvorrichtung verbunden zum Ausrichten der Kamera auf den zu befundenden Bereich. Insbesondere kann hierfür ein einstellbares Stativ, also ein Stativ mit einer arretierbaren oder feststellbaren Bewegungsmechanik für die Kamera verwendet werden. Weiterhin weist die Befundungsvorrichtung eine Positionserfassungsvorrichtung auf, die dazu vorbereitet ist, die jeweilige Position des zu befundenden Bereiches bzw. des befundeten Bereiches zu erfassen.

Vorzugsweise ist die Kamera mit einer Teleskopoptik, insbesondere einem Teleskop versehen, um die zu befundenden Bereiche optisch zu vergrößern, insbesondere um ein vergrößertes Foto von dem jeweils zu befundenden Bereich aufnehmen zu können. Vorzugsweise wird insbesondere zusammen mit einer solchen Teleskopoptik eine hochauflösende Fotokamera verwendet.

Gemäß einer Ausgestaltung ist die Positionserfassungsvorrichtung als Projektionsvorrichtung mit einer Projektionsfläche ausgebildet. Vorzugsweise ist die Kamera mit einem Leuchtmittel, insbesondere einem Laserpointer verbunden, um einen Lichtfleck auf der Projektionsfläche an einer Position zu erzeugen, die der Position des zu befundenden Bereiches am Rotorblatt entspricht.

Eine weitere Ausführungsform schlägt vor, eine Datenverarbeitungseinrichtung zum Zuordnen des jeweiligen Fotos des jeweils zu befundenden Bereiches zur erfassten Position des zu befundenden Bereiches vorzusehen. Vorzugsweise ist diese Datenverarbeitungseinrichtung dazu vorbereitet, dass Foto mit der zugeordneten Position abzuspeichern. Hierdurch wird eine höhere Automatisierung vorgeschlagen, die eine optische Befundung eines Rotorblattes mit anschließender Dokumentation ermöglicht, wobei die Dokumentation ganz oder teilweise von der Datenerfassungseinrichtung übernommen werden kann. Hierdurch wird Zeit eingespart und Fehlerquellen vermieden.

Günstig ist es, wenn die Ausrichtvorrichtung wenigstens eine elektronische Steuerung und eine motorischen Antrieb zum automatisierten Ausrichten der Kamera aufweist. Hierdurch kann auf einfache Weise eine optische Befundung vorgesehen werden. Es ist hierdurch möglich, die zu befundenden Bereiche eines Rotorblattes, also insbesondere alle Oberflächenbereiche eines Rotorblattes, sukzessive abzutasten, jeweils ein oder sicherheitshalber mehrere Fotos für jeden Bereich aufzunehmen, dieses zu Dokumentieren und zu Archivieren. Selbst wenn kein Riss oder anderes Anzeichen einer Rotorblattbeschädigung aufgefunden wurde, kann eine solche Dokumentation als späterer Nachweis dienen. Durch die Befundung des Rotorblattes, oder eines anderen Teils einer Windenergieanlage, durch die Befundungsvorrichtung, nämlich insbesondere vom Boden aus kann entsprechende Automatisierungstechnik für die Befundungsvorrichtung vorgesehen werden.

Vorzugsweise ist eine solche automatisierte Ausrichtvorrichtung mit der Datenverarbeitungseinrichtung gekoppelt, um durch die Datenverarbeitungseinrichtung angesteuert zu werden. Somit kann Durchführung und Archivierung der Befundung und gegebenenfalls auch Auswertungen der Befundung automatisiert durchgeführt werden. Hierdurch sind entsprechende Zeitersparnisse und verbesserte Reproduzierbarkeiten als Vorteile zu nennen. Vorzugsweise weist die Datenverarbeitungseinrichtung eine Bildverarbeitungssoftware auf, die jedes Bild auf eine Rissbildung hin oder andere bekannte Anzeichen von Beschädigungen auswerten oder zumindest vorauswerten kann.

Schließlich ist für eine erhöhte Automatisierung und das Vermeiden von aufwendigen Höhenarbeiten auch ein Sicherheitsaspekt als weiterer Vorteil zu nennen. Ist nämlich eine sehr starke Vereinfachung der Befundung erzielbar, so kann eine Befundung auch ohne weiteres in kürzeren Abständen durchgeführt werden, wodurch eine erhöhte Sicherheit gewährleistet werden kann. Erfolgt eine automatisierte Befundung des Rotorblattes, sind auch deutlich kürzere Stillstandszeiten der Windenergieanlage währende der Befundung notwendig.

Somit wird ein Verfahren und eine Vorrichtung zur optischen Befundung von Teilen einer Windenergieanlage, insbesondere von Bereichen eines Rotorblattes vorgeschlagen. Hierdurch sollen insbesondere Einsparungen von Kosten und Zeit bei der Befundung von Rotorblättern erzielt werden, sowie eine Minimierung von Risiken durch Höhenarbeit.

Weiterhin ist eine Optimierung einer Einsatzplanung für den Rotorblattservice, also der Service der üblicherweise Rotorblattbefundungen durchführt, erzielbar. Zudem wird eine Massenbefundung möglich oder zumindest erleichtert, eine Verbesserung der Einsatzplanung von Rotorblattwartungen kann beispielsweise so erfolgen, dass die Befundung zum richtigen Zeitpunkt an der richtigen Anlage erfolgt. Zudem wird eine zustandsorientierte Instandhaltung begünstigt. Durch eine schnelle Befundung von Rotorblättern und damit kurze Stillstandszeiten wächst auch die Akzeptanz beim Windenergieanlagenbetreiber, eine solche Befundung und ein damit verbundenen Stillstand zu akzeptieren.

Die vorgeschlagene Befundung bzw. Befundungsvorrichtung zielt insbesondere auf eine Befundung vom Boden aus ab. Grundsätzlich ist ein handelsübliches Teleskop einsetzbar, das für terrestrische Beobachtungen geeignet ist. Solche modernen Teleskope haben die Vorteile, dass sie kostengünstig, transportabel und zum Teil feinsteuerbar sind, nämlich sowohl manuell als auch über einen Computer. Weitere Vorteile sind das bekannte Kameratechnik adaptiert werden kann, wie beispielsweise eine Webcam oder hochwertige Kameratechnik. Grundsätzlich kommt auch die Verwendung von Spezialkameras für Wärmebilder oder Infrarotaufnahmen in Betracht. Vorzugsweise sollte eine hochauflösende Kamera verwendet werden, die in Kombination mit einem Teleskop aber begrenzt sein kann. Weiterhin kann Software zur Aufbereitung und Steuerung eingesetzt werden. Für spezielle Anwendungen wie beispielsweise die konkrete Anpassung an die Form des zu befundenden Rotorblattes können verwendete Systeme offene Schnittstellen für Anpassungen an spezielle Anwendungen ermöglichen.

Eine Möglichkeit der Vornahme der Befundung erfolgt durch ein Teleskop der Marke "Meade", Typbezeichnung LX90, wie beispielsweise auf der Internetseite http://www.meade.com/lx90/index.html. Hierbei handelt es sich um ein 8-Zoll-Gerät, das über GPS und Kompass verfügt und motorisch ausgerichtet wird.

Die Ausrichtung dieses Teleskop erfolgt für astronomische Beobachtungen weitgehend automatisch mit Hilfe vom GPS und Kompass. Im terrestrischen Modus, der für die Befundung eingesetzt werden kann, wird das Teleskop vorzugsweise manuell über eine Fernbedienung positioniert und gesteuert. Aber auch hier kann vorzugsweise über vorgesehene Schnittstellen eine Anpassung erfolgen und eine Automatisierung für wiederkehrende Prüfungen vorgesehen werden.

Grundsätzlich ist eine rein manuelle Befundung mittels eines Teleskopes, also ausschließlich durch Blick durch das Teleskop durchführbar. Grundsätzlich wird aber zur Fotodokumentation vorgeschlagen, eine hochwertige 20 Megapixel Kamera vom Typ Canon EOS5D oder eine handelsübliche Webcam wie beispielsweise eine Logitech 2 Megapixel Kamera oder eine handelsübliche kleine Digitalkamera wie beispielsweise eine Canon Powershot A460, 5 Megapixel vorzusehen. Auch andere Kameras können verwendet und an ein entsprechendes Teleskop angepasst werden, wie beispielsweise eine Kamera des Unternehmens "The Imaging Source".

An Stelle des genannten 8-Zoll-Gerätes wird die Verwendung eines 10-Zoll- oder 12-Zoll-Gerätes vorgeschlagen.

Der Aufbau einer Befundungsvorrichtung sowie Ausrichtung und Orientierung des Rotorblattes wird nachfolgend an einem konkreten Beispiel beschrieben.

Es wird ein Teleskop verwendet, das auf einem stabilen Stativ montiert wird. Als eine Ausführungsform wird vorgeschlagen, die Ausrüstung, also insbesondere das Teleskop auf einem Fahrzeug vorzusehen, bei dem das Teleskop komplett am Fahrzeug verbleiben kann. Hierfür wird für das Fahrzeug ein Rahmen eingesetzt, der durch einen Fahrzeugboden abgelassen werden kann. Hierbei steht das Teleskop auf dem Rahmen, der abgelassen werden kann, so dass das Teleskop dann einen festen Stand auf dem Boden hat, gleichwohl im Fahrzeug ist, sich zumindest teilweise im Fahrzeug befindet. Hierdurch können Rüstzeiten durch Auf- und Abbau des Teleskopes reduziert werden. Im Grunde kann mit dem Fahrzeug zum gewünschten Ort gefahren werden, die entsprechende Fahrzeugtür geöffnet und die Befundung gestartet werden. Durch das Ablassen des Rahmens durch den Fahrzeugboden ergibt sich eine Entkoppelung von Fahrzeug und Teleskop. Hierdurch kann die Güte der Bilder maßgeblich verbessert bzw. erst eine hohe Güte erreicht werden, weil hierzu insbesondere ein stabilerer Aufbau gewährleistet sein sollte. Alternativ oder zusätzlich können Stabilisierungssysteme zum Stabilisieren des Bildes eingesetzt werden, was als eine Ausführungsform vorgeschlagen wird. Zum Ausrichten kann das Teleskop über eine Fernsteuerung manuell oder rechnergesteuert angesteuert werden. Eine Kamera kann über das Okular des Teleskopes montiert werden.

Das Rotorblatt wird so positioniert, dass über die Länge des Blattes ein nahezu gleicher Abstand zwischen Rotorblatt und Teleskop bzw. Kamera erreicht wird. Die Entfernungsmessung kann beispielsweise mit einem sogenannten Range-Finder erfolgen.

Hierbei wird zunächst die Entfernung zwischen Teleskop und Blatterweiterung oder Gondelunterseite bestimmt. Dieser Abstand muss dann auch zwischen Rotorblattspitze, also dem Tip und dem Teleskop eingestellt werden. Hierzu kann der Rotor zunächst durchtrudeln, also im Grunde durch den Wind aber ohne Kraft gedreht werden, um dann am Steuerschrank der Windenergieanlage durch Betätigung des Notausschalters im richtigen Augenblick den Rotor und damit das zu untersuchende Rotorblatt an der gewünschten Stelle anzuhalten.

Ein möglichst konstanter Abstand zwischen Teleskop und Rotorblatt bzw. einem anderen zu untersuchenden Bauteil, auf ganzer Rotorblattlänge bzw. Bauteillänge bewirkt, dass wenig oder gar nicht nachfokussiert werden muss. Gegebenenfalls kann eine Fokussierung für die Befundung des gesamten Rotorblattes ausreichend sein. Ist das Rotorblatt nicht in dieser gewünschten Art und Weise ausgerichtet, kann die optische Befundung gleichwohl durchgeführt werden, führt jedoch zu einem höheren Fokussieraufwand.

Zur Orientierung am Rotorblatt ist am Teleskop oder an der Kamera ein Laserpointer montiert, der auf einer Flipchart hinter dem Teleskop einen Punkt projiziert. Zur Orientierung am Rotorblatt wird mit dem Teleskop der Tip angefahren und die Tipposition auf den Flipchart markiert. Im Falle einer Enercon E82 Windenergieanlage entspricht dies einem Radius von 41m. Als nächstes wird der Wurzelbereich bzw. die Blattschürze angefahren, was im Grunde auch mit einem Flansch des Rotorblattes zum Befestigen an der Rotornabe übereinstimmt. Für das Beispiel der Enercon Windenergieanlage E82 entspricht dies einem Radius von 3,1m. Auch dieser Punkt wird auf dem Flipchart markiert, und die übrigen Radien zwischen diesen beiden Punkten lassen sich einfach bestimmen.

Radien, bspw. im Abstand von Metern, werden entweder berechnet und auf der Flipchart gekennzeichnet oder es wird ein elastisches Band, insbesondere ein Gummiband verwendet, auf dem ein Raster für die Windenergieanlage, also in obigen Beispiel für das Rotorblatt der Enercon Windenergieanlage E82 gekennzeichnet ist. Der Abstand zwischen Teleskop und dem Rotorblatt kann von Anlage zu Anlage variieren, und auch der Abstand zwischen Teleskop und Flipchart, also der Projektionsfläche kann leicht variieren. Durch Dehnen des elastischen Bandes und damit des darauf aufgetragenen Gummibandrasters können die Referenzmaße auf einfache Art und Weise auf die Flipchart übertragen werden. Alternativ kann beispielsweise ein Referenzmaß, also eine Skalierung mittels Zollstock an der Flipchart angebracht also angezeichnet werden und die zugehörigen Radien berechnet werden. Weiterhin besteht die Möglichkeit, über Winkelinformationen bzw. Winkelmeldungen des Teleskopes und den geometrischen Verhältnissen eine Orientierung durchzuführen. Vorzugsweise wird vorgeschlagen, Referenzmarken am Rotorblatt vorzusehen, die ein entsprechendes System wie eine Datenverarbeitungseinrichtung, die mit der Befundungsvorrichtung insbesondere der Kamera verbunden ist, einliest und verarbeitet. Hierdurch kann eine Orientierung am Rotorblatt vorgenommen oder verbessert werden.

Gemäß einer Ausführungsform der Erfindung wird ein Verfahren vorgeschlagen, das dadurch gekennzeichnet ist, dass zum Erfassen der Position des fotografierten Bereiches wenigstens ein Ausrichtwinkel der Kamera bzw. einer verwendeten Teleskopoptik in Bezug auf eine Referenzausrichtung erfasst wird. Durch die Erfassung eines solchen Winkels ist die Position des jeweils fotografierten und damit befundeten Bereichs bestimmbar. Hierzu kann der Winkel in eine Richtung, z.B. eine Längsrichtung des befundeten Teils, erfasst werden, um eine Position hinsichtlich dieser Richtung auf dem Teil zu erfassen. Optional kann zusätzlich wenigstens ein weiterer Winkel insbesondere in eine Querrichtung zur genannten Längsrichtung oder quer zu einer anderen ersten Richtung aufgenommen werden, um einen befundeten Bereich auch in zwei Richtungen bestimmen zu können, um dadurch eine Position jeweils auf einer Fläche also zweidimensional zu bestimmen. Die zugrunde liegenden Möglichkeiten werden nachfolgend insbesondere für die Erfassung eines Winkels in einer Richtung erläutert, was aber ohne weiteres auf die Verwendung von wenigstens zwei Winkeln sinngemäß auch anzuwenden ist.

Aus einem aufgenommenen Winkel kann entweder über bekannte Zusammenhänge ein tatsächlicher Ort auf dem zu befundenden Teil im Sinne von Koordinaten oder Abmessungen zugeordnet werden. Mit anderen Worten können Winkelwerte in korrespondierende Längenwerte umgerechnet werden. Alternativ können die Winkelwerte ohne Umrechnung einfach als Referenzwerte hinterlegt werden. Der Ausrichtwinkel bezieht sich auf eine Referenzausrichtung, die willkürlich festgelegt werden kann. Eine Möglichkeit der Festlegung der Referenzausrichtung ist, ihr einen charakteristischen Punkt auf dem zu befundenden Teil zuzuordnen, wie beispielsweise in der Mitte oder am Rande des zu befundenden Teils.

Vorzugsweise wird vorgeschlagen, wenigstens eine Abmessung in eine Längsrichtung des zu befundenden Teils von einem ersten Referenzpunkt zu einem zweiten Referenzpunkt dieses Teils zu erfassen. Beispielsweise kann das zu befundende Teil ein Rotorblatt sein, und der erste Referenzpunkt liegt in der Wurzel des Rotorblattes, und der zweite Referenzpunkt liegt in der Rotorblattspitze. Das Erfassen der Abmessung in Längsrichtung, also im Beispiel das Erfassen der Länge des Rotorblattes kann auch dadurch erfolgen, dass der entsprechende Wert bereits bekannt ist oder aus einem Datenblatt entnommen wird.

Weiterhin werden ein erster Referenzwinkel und ein zweiter Referenzwinkel aufgenommen. Diese beziehen sich jeweils auf den Ausrichtwinkel der Kamera bzw. Teleskopoptik zum ersten bzw. zweiten Referenzpunkt. Im genannten Beispiel gibt der erste Referenzwinkel somit den Winkel bei Ausrichtung zur Rotorblattwurzel und der zweite Referenzwinkel den Ausrichtwinkel bei Ausrichtung zur Rotorblattspitze an. Dadurch ist auch ein Differenzwinkel zwischen erstem und zweitem Ausrichtwinkel bekannt bzw. kann auf einfache Weise berechnet werden. Einem solchen Differenzwinkel kann im Übrigen die Abmessung also die Rotorblattlänge des genannten Beispiels zugeordnet werden.

Weiterhin wird jeweils ein aktueller Ausrichtwinkel der Kamera bzw. Teleskopoptik zum aktuell befundeten Bereich aufgenommen. Der aktuelle Ausrichtwinkel ist somit derjenige Winkel, der sich einstellt, wenn die Fotokamera bzw. die Teleskopoptik auf den jeweils zu befundenden Bereich ausgerichtet ist. Dem hierbei aufgenommenen Foto des betreffenden Bereiches kann dieser aktuelle Ausrichtwinkel zugeordnet werden. Vorzugsweise wird dieser zusammen mit dem Foto bzw. mit einem Identifikationscode wie einer Referenznummer des aufgenommenen Fotos in einer Tabelle abgespeichert.

Weiterhin kann aus dem aktuellen Ausrichtwinkel unter Berücksichtigung der beiden Referenzwinkel und der Abmessung die aktuelle Position bestimmt werden. Dies kann beispielsweise durch Interpolation erfolgen.

Wird beispielsweise ein 50m langes Rotorblatt zum Befunden senkrecht zu einer Blickrichtung von einer Befundungsvorrichtung aus ausgerichtet und beträgt der erste Referenzwinkel, nämlich der Winkel zur Rotorblattwurzel 5 Grad und der zweite Referenzwinkel, nämlich der Winkel zur Rotorblattspitze -5 Grad, so ist jedem Grad in erster Näherung eine Abmessung von 5m zuzuordnen. Beträgt also beispielsweise ein aktueller Ausrichtwinkel 2 Grad, so befindet sich der zugehörige, befundete Bereich 15m unterhalb der Rotorblattwurzel. Diese Position kann zusammen mit einer Referenznummer des Fotos dieses Bereichs in einer Tabelle abgespeichert werden. Auch kleinere Winkelschritte können einer Position zugeordnet werden. Die Zuordnung kann beispielsweise durch Interpolation erfolgen. Alternativ kann auch unter Verwendung trigonometrischer Funktionen die Position noch genauer berechnet und abgespeichert oder alternativ erst abgespeichert und später berechnet werden.

Die Befundungsvorrichtung weist somit eine Positionserfassungsvorrichtung auf, die ein Winkelerfassungsmittel umfasst. Dieses Winkelerfassungsmittel kann einen Ausrichtwinkel einer Kamera, insbesondere Fotokamera und/oder einer Teleskopoptik erfassen und insbesondere datenverarbeitungstechnisch weiterverarbeiten, wie beispielsweise an eine angeschlossenen Datenverarbeitungseinrichtung übergeben. Das Winkelerfassungsmittel kann mit einem Kompass und/oder einem Drehratensensor und/oder einer Wasserwaage ausgestattet sein, um hierdurch einen relativen und/oder einen absoluten Winkel bestimmen zu können. Weitere technische Umsetzungen sind ebenfalls möglich.

Die Verwendung einer Positionserfassungsvorrichtung mittels eines Winkelerfassungsmittels kann alternativ oder zusätzlich zur Erfassung einer befundeten Position mittels einer Projektionseinrichtung erfolgen.

Nachfolgend wird die Erfindung anhand von Ausführungsbeispielen unter Bezugnahme auf die begleitenden Figuren beispielhaft erläutert.
- Figur 1: zeigt schematisch eine Anordnung mit einer zur Befundung vorbereiteten Windenergieanlage.
- Figur 2: zeigt schematisch eine Vorrichtung zur Rotorblattbefundung.
- Figur 3: zeigt schematisch eine Windenergieanlage.

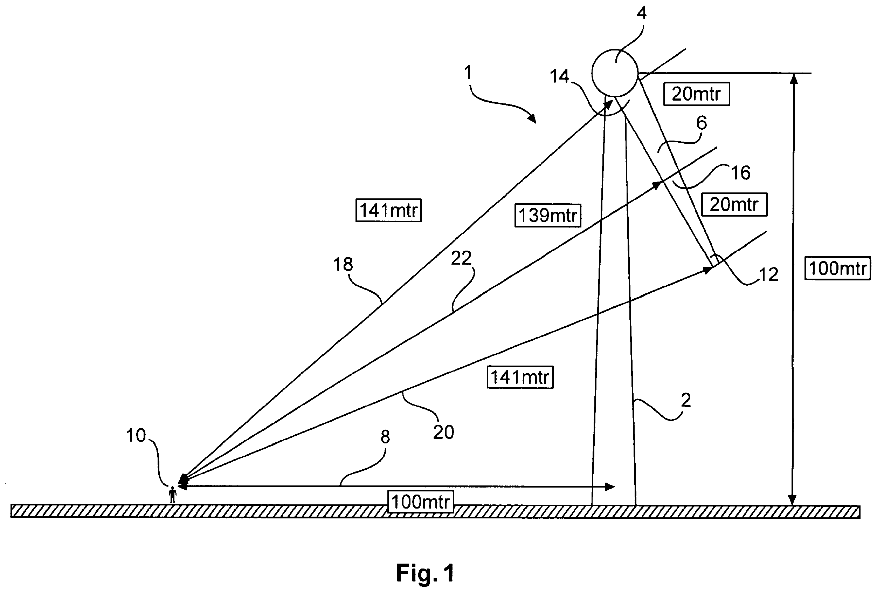

Figur 1 zeigt schematisch eine Windenergieanlage 1 mit einem Turm 2 und einer Gondel 4 bzw. Nabe 4, die drei Rotorblätter 6 aufweist, von denen in der Figur 1 nur eines dargestellt ist.

Ein Beobachter 10 befindet sich in einem Beobachtungsabstand 8 vom Turm 2 entfernt. Der Beobachtungsabstand 8 ist durch einen Doppelfeil veranschaulicht und im vorliegenden Beispiel beträgt er 100m, was lediglich einen beispielhaften Wert darstellt.

Von der Position des Beobachters 10 aus ist hier die Befundung vorzunehmen.

Das Rotorblatt 6 weist eine Rotorblattspitze 12 auf, die auch als "Tip" bezeichnet wird. Zur Gondel bzw. Nabe 4 hin weist das Rotorblatt 6 einen Wurzelbereich 14 mit einem Flansch zur Befestigung an der Gondel bzw. Nabe 4 auf. Der Flansch ist hierbei nicht im Detail dargestellt, bildet aber im Grunde den Kontaktbereich der Nabe zum Rotorblatt 6. Zwischen der Rotorblattspitze 12 und dem Wurzelbereich 14 ist ein mittlerer Bereich 16 ausgebildet.

Die Windenergieanlage wird zur Befundung so angehalten, dass das zu untersuchende Rotorblatt 6 so zu stehen kommt, dass der Abstand zwischen Wurzelbereich 14 und Rotorblattspitze 12 zum Beobachter 10 möglichst gleich ist. Soweit der Beobachtungsabstand 8 und somit auch der Abstand des Beobachters 10 von dem Rotorblatt 6 nur groß genug ist, entspricht der Abstand vom Beobachter 10 zum mittleren Bereich 16 des Rotorblattes 6 auch etwa dem Abstand vom Beobachter 10 zum Wurzelbereich 14 bzw. zur Rotorblattspitze 12 des Rotorblattes 6.

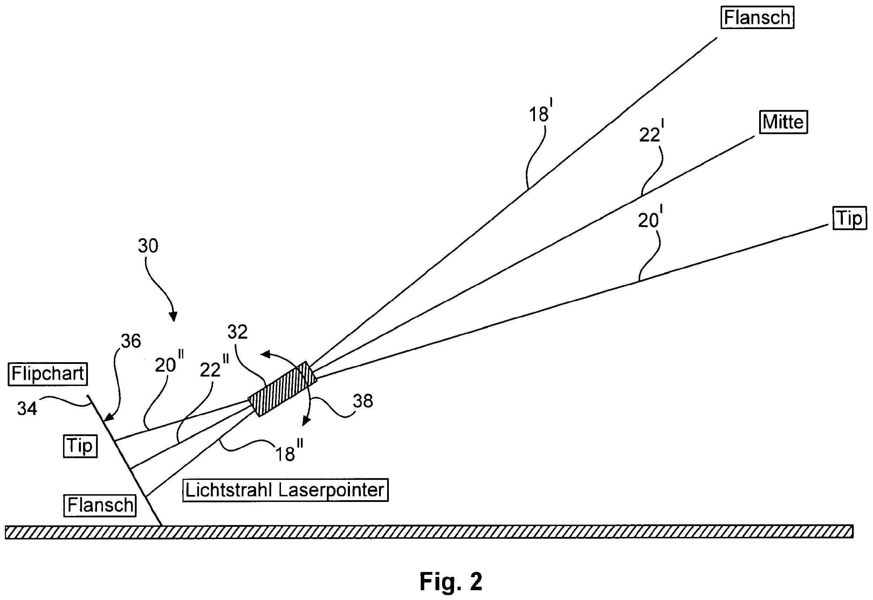

In dem gemäß Figur 2 zur Veranschaulichung gewählten Beispiel weist die Windenergieanlage 1 eine Nabenhöhe von 100m auf. Der Beobachtungsabstand 8 vom Beobachter 10 zum Turm 2, nämlich zum Turmfuß, beträgt ebenfalls 100m. Es ist aber nicht erforderlich, dass der Beobachtungsabstand 8 der Nabenhöhe entspricht. Diese bevorzugte Ausführungsform eignet sich aber gut zur Erläuterung des vorliegenden Befundungsverfahrens. Die Länge des Rotorblattes 6 des gezeigten Beispiels beträgt 40m, wobei vereinfachend der Mittelpunkt der Rotornabe 4 mit dem Wurzelbereich 14 des Rotorblattes 6 als übereinstimmend angenommen wird. Der Flanschabstand 18, also der Abstand vom Beobachter 10 zum Wurzelbereich bzw. Flanschbereich 14 des Rotorblattes 6 beträgt somit 141m.

Der Rotor ist nun in einer solchen Position abgehalten worden, dass das Rotorblatt 6 in einer solchen Position steht, dass der Tipabstand 20, nämlich der Abstand vom Beobachter 10 zur Rotorblattspitze genauso groß ist wie der Flanschabstand, nämlich 141m. Der Tipabstand kann auch als Abstand zur Rotorblattspitze bezeichnet werden. Entsprechend ergibt sich ein Mittelbereichsabstand 22, nämlich der Abstand des Beobachters 10 zum mittleren Bereich 16 des Rotorblattes 6 zu 139m. Entsprechend ergibt sich näherungsweise - bis auf wenige Meter - ein gleicher Abstand vom Beobachter 10 zu unterschiedlichen Bereichen des Rotorblattes 6. Für eine Beobachtung des Rotorblattes vom Beobachter 10 aus mittels eines optischen Gerätes kann somit eine einmalige Scharfstellung für die Befundung des gesamten Rotorblattes 6 ausreichend sein. Hierzu braucht im gezeigten Beispiel die Tiefenschärfe bzw. Korrektur der Tiefenschärfe oder Schärfe des optischen Gerätes nur etwa 2m zu betragen bzw. auszugleichen.

Eine Befundungsanordnung 30, also eine Anordnung zum Durchführen einer Befundung eines Rotorblattes ist in der Figur: 2 veranschaulicht. Die Befundungsanordnung 30 weist im Wesentlichen eine Kamera 32, insbesondere eine digitale Fotokamera, sowie ein Projektionsaufnahmemittel 34 mit einer Projektionsfläche 36 auf. Als Projektionsaufnahmemittel kann beispielsweise ein sogenanntes bzw. eine so genannte Flipchart, also eine Tafel mit Schreib- oder Zeichenpapier verwendet werden. Die Kamera 32 ist vorzugsweise auf einem - in der schematischen Darstellung der Figur : 2 nicht gezeigtem - Stativ befestigt, um auf diesem Stativ in Richtung auf das Rotorblatt 6 auf den jeweils zu befundenden Bereich des Rotorblattes 6 ausgerichtet zu werden. Die Kamera 32 wird somit sukzessive auf Oberflächenbereiche des zu befundenden Rotorblattes 6 ausgerichtet, und die entsprechenden Bereiche werden fotografiert und können vor Ort oder im Nachhinein ausgewertet werden. Figur 2 veranschaulicht exemplarisch die Ausrichtung 18' zum Flansch bzw. Wurzelabschnitt 14 des Rotorblattes 6, die Ausrichtung 20' in Richtung zum Tip bzw. zur Rotorblattspitze 12, und die Ausrichtung 22' zum Mittelbereich 16 des Rotorblattes 6. Die Ausrichtungen 18', 20' und 22' verlaufen somit entlang der Figur 2 dargestellten Linien, die den Flanschabstand 18, Tipabstand 20 bzw. Mittelbereichsabstand 22 veranschaulichen.

Der Vollständigkeit halber sei erwähnt, dass die Figuren 1 und 2 das Befundungsverfahren exemplarisch in einer Ebene erläutern, demnach die Ausrichtung der Kamera 32 sich nur entlang einer Längsachse des Rotorblattes 6 verändert. Tatsächlich kann natürlich auch eine Ausrichtung quer zur Rotorblattlängsachse verändert werden. Die Figur 2 veranschaulicht zum Ausrichten eine Schwenkrichtung 38 mit einem entsprechenden Doppelfeil, durch die die Kamera 32 entlang der Längsrichtung des Rotorblattes ausgerichtet werden kann, wohingegen eine zweite Schwenkrichtung zum Ausrichten quer zur Längsrichtung des Rotorblattes 6 in die Zeichenebene der Figur 2 hinein verläuft und aus diesem Grunde nicht dargestellt ist.

Die Kamera 32 weist zudem ein Leuchtmittel wie beispielsweise einen Laserpointer oder modifizierten Laserpointer auf, das einen Lichtstrahl entlang der optischen Achse der Kamera 32 in rückwärtiger Richtung, nämlich von der Kamera 32 in Richtung auf die Projektionsfläche 36 erzeugt. Für die in Figur 2 gezeigten Ausrichtungen, nämlich die Ausrichtung 18' zum Flansch, 20' zum Tip und 22' zum Mittelbereich sind korrespondierende Projektionsstrahlen eingezeichnet, die der entsprechenden Ausrichtung entsprechen. Somit ergibt sich ein Flanschprojektionsstrahl 18" bei einer Flanschausrichtung 18', ein Tipprojektionsstrahl 20" bei Ausrichtung 20' zum Tip und ein Mittelbereichprojektionsstrahl 22" bei Mittelbereichsausrichtung 22'. Über den sich ergebenden Lichtfleck auf der Projektionsfläche 36 kann die Befundung des Rotorblattes 6 auf der Projektionsfläche 36 dokumentiert werden. So kann beispielsweise zu jedem Foto, das in einem Bereich des Rotorblattes 6 aufgenommen wird, eine entsprechende Dateinummer, z.B. eine Nummer der Fotodatei, an der entsprechenden Position auf der Projektionsfläche 36 notiert werden.

Durch diesen rückwärts ausgestrahlten Lichtstrahl, der auch in andere Richtungen vorgesehen sein kann, kann die gesamte Form, beispielsweise eine Silhouette des Rotorblattes auf der Projektionsoberfläche 36, die beispielsweise ein Zeichenblatt sein kann, gezeichnet werden. Das so projizierte Rotorblatt ist gegenüber dem Originalrotorblatt 6 um 180° gedreht und verkleinert. Da die Größe des zu befundenden Rotorblattes bekannt ist, ist auf einfache Weise eine Skalierung der Projektion auf der Projektionsoberfläche 36 möglich. Beispielsweise kann auch der Einfachheit halber eine zu erwartende Skalierung oder bei einer früheren Befundung einer baugleichen Windenergieanlage aufgenommene Skalierung auf einem Gummiband vorgesehen sein. Hierdurch kann auf einfache Weise die Skalierung auf die neue Projektion übertragen werden, indem bei leichten Abweichungen der Größenverhältnisse das die Skalierung tragende Gummiband auf die neue Größe gestreckt werden kann. Die Skalierung passt sich proportional an und braucht nicht neu durchgerechnet zu werden.

## Patentansprüche

1. Verfahren zum optischen Befunden einer Windenergieanlage (1) oder eines Teils davon, insbesondere eines Rotorblattes (6), umfassend die Schritte:
- Ausrichten einer Kamera (32) auf einen zu befundenden Bereich,
- Aufnehmen eines Fotos des zu befundenden Bereichs mit der Kamera (32),
- Erfassen der Position des fotografierten Bereichs, mit einer Positionserfassungsvorrichtung mit einem Winkelerfassungsmittel indem wenigstens ein Ausrichtwinkel der Kamera und/oder einer Teleskopoptik in Bezug auf eine Referenzausrichtung erfasst wird, und
- Zuordnen der ermittelten Position zum fotografierten Bereich,
- Erfassen wenigstens einer Abmessung in einer Längsrichtung des zu befundenden Teils von einem ersten Referenzpunkt zu einem zweiten Referenzpunkt des Teils,
- Aufnehmen wenigstens eines ersten Referenzwinkels, der den Ausrichtwinkel zum ersten Referenzpunkt angibt,
- Aufnehmen wenigstens eines zweiten Referenzwinkels, der den Ausrichtwinkel zum zweiten Referenzpunkt angibt,
- Aufnehmen eines aktuellen Ausrichtwinkels, der den Ausrichtwinkel zum aktuell befundeten Bereich angibt, und
- Ermitteln der aktuellen Position des aktuell befundeten Bereichs, zumindest in Bezug auf die Längsrichtung des Teils, aus dem aktuellen Ausrichtwinkel, den Referenzwinkeln und optional der Abmessung in Längsrichtung.

2. Verfahren nach Anspruch 1, **dadurch gekennzeichnet, dass** eine Kamera (32) mit Teleskopoptik verwendet wird und der zu befundende Bereich zum Aufnehmen eines Fotos mittels der Teleskopoptik optisch vergrößert wird.

3. Verfahren nach Anspruch 1 oder 2, **dadurch gekennzeichnet, dass** ein Rotorblatt (6) mit einer Rotorblattwurzel (20) und einer Rotorblattspitze (12) befundet wird und dass das Rotorblatt (6) und die Kamera (32) so zu einander ausgerichtet werden, dass sich zwischen Kamera (32) und Rotorblattwurzel (14) einerseits und zwischen Kamera (32) und Rotorblattspitze (12) andererseits der gleiche Abstand einstellt, und/oder dass eine Längsachse des Rotorblatts (6) senkrecht zu einer optischen Achse zwischen Kamera (32) und einem mittleren Bereich (16) des Rotorblatts (6) steht.

4. Verfahren nach einem der vorstehenden Ansprüche, **gekennzeichnet durch** den Schritt
- Speichern des aktuellen Ausrichtwinkels und/oder der ermittelten aktuellen Position in einer Tabelle, zusammen mit Daten der aufgenommenen Befundung, insbesondere zusammen mit dem aufgenommenen Foto und/oder einem Identifikationscode des aufgenommenen Fotos.

5. Verfahren nach einem der vorstehenden Ansprüche, **dadurch gekennzeichnet, dass** ein Rotorblatt befundet wird und der erste Referenzpunkt im Wurzelbereich des Rotorblatts und der zweite Referenzpunkt an der Blattspitze des Rotorblatts definiert ist.

6. Verfahren nach einem der vorstehenden Ansprüche, **dadurch gekennzeichnet, dass** zum Ermitteln der Position des fotografierten Bereichs eine Projektionsvorrichtung (30) mit einer Projektionsfläche (36) vorgesehen ist, um durch die Ausrichtung der Kamera (32) eine zum befundeten Bereich korrespondierende Position auf die Projektionsfläche (36) zu projizieren.

7. Verfahren nach einem der vorstehenden Ansprüche, **dadurch gekennzeichnet, dass** die Kamera (32) ein Leuchtmittel, insbesondere einen Laserpointer, aufweist, um abhängig von der Ausrichtung der Kamera (32) Licht auf eine bzw. die Projektionsfläche (36) zu geben, so dass ein Lichtpunkt oder Lichtfleck auf der Projektionsfläche (36) sichtbar wird.

8. Verfahren nach einem der vorstehenden Ansprüche, **dadurch gekennzeichnet, dass** eine bzw. die Projektionsfläche (36) mittels einer auf einem elastischen Band aufgetragenen Skalierung skaliert wird, wobei das elastische Band zum Skalieren der Projektionsfläche (36) auf eine zu skalierende Strecke gestreckt wird.

9. Befundungsvorrichtung (30) zum optischen Befunden eines Rotorblatts (6) einer Windenergieanlage (1) umfassend:
- eine Kamera (32) zum Aufnehmen jeweils eines Fotos eines zu befundenden Bereiches des Rotorblatts (6),
- eine mit der Kamera (32) verbundene Ausrichtvorrichtung zum Ausrichten der Kamera (32) auf den zu befundenden Bereich,
- eine Positionserfassungsvorrichtung zum Erfassen der Position des zu befundenden Bereichs,
eine Datenverarbeitungseinrichtung zum Zuordnen des jeweiligen Fotos des jeweils zu befundenden Bereiches zur erfassten Position des zu befundenden Bereiches,
wobei die Ausrichtvorrichtung wenigstens eine elektronische Steuerung und einen motorischen Antrieb zum automatisierten Ausrichten der Kamera (32) aufweist und die Ausrichtvorrichtung mit der Datenverarbeitungseinrichtung gekoppelt ist, um durch die Datenverarbeitungseinrichtung angesteuert zu werden, und
wobei die Positionserfassungsvorrichtung ein Winkelerfassungsmittel zum Aufnehmen wenigstens eines Ausrichtwinkels der Kamera umfasst,
wobei die Befundungsvorrichtung dazu eingerichtet ist,
- wenigstens eine Abmessung in einer Längsrichtung des zu befundenden Teils von einem ersten Referenzpunkt zu einem zweiten Referenzpunkt des Teils zu erfassen,
- wenigstens einen ersten Referenzwinkel aufzunehmen, der den Ausrichtwinkel zum ersten Referenzpunkt angibt,
- wenigstens eines zweiten Referenzwinkels aufzunehmen, der den Ausrichtwinkel zum zweiten Referenzpunkt angibt,
- einen aktuellen Ausrichtwinkel aufzunehmen, der den Ausrichtwinkel zum aktuell befundeten Bereich angibt, und
- die aktuelle Position des aktuell befundeten Bereichs, zumindest in Bezug auf die Längsrichtung des Teils, aus dem aktuellen Ausrichtwinkel, den Referenzwinkeln und optional der Abmessung in Längsrichtung zu ermitteln.

10. Befundungsvorrichtung nach Anspruch 9, **dadurch gekennzeichnet, dass** die Kamera (32) mit einer Teleskopoptik, insbesondere einem Teleskop, zum optischen Vergrößern des zu befundenden Bereiches vor dem Aufnehmen eines Fotos ausgestattet ist.

11. Befundungsvorrichtung nach Anspruch 9 oder 10, **dadurch gekennzeichnet, dass** die Positionserfassungsvorrichtung als Projektionsvorrichtung (34) mit einer Projektionsfläche (36) ausgebildet ist und optional ein mit der Kamera (32) verbundenes Leuchtmittel, insbesondere einen Laserpointer, aufweist zum Erzeugen eines Lichtflecks oder Lichtpunktes auf der Projektionsfläche (36) an einer mit der Position des zu befundenden Bereichs korrespondieren den Position.

12. Befundungsvorrichtung nach einem der Ansprüche 9 bis 11, umfassend eine Datenverarbeitungseinrichtung zum Abspeichern des Fotos mit der zugeordneten Position bzw. Identifikationsdaten davon.

13. Befundungsvorrichtung nach einem der Ansprüche 9 bis 12, **dadurch gekennzeichnet, dass** eine bzw. die Datenverarbeitungseinrichtung eine Bildverarbeitungssoftware zum Auswerten jeweils eines Fotos eines zu befundenden Bereiches aufweist.

14. Befundungsvorrichtung nach einem der Ansprüche 9 bis 13, **dadurch gekennzeichnet, dass** die Positionserfassungsvorrichtung ein Winkelerfassungsmittel umfasst zum Aufnehmen wenigstens eines Ausrichtwinkels der bzw. einer Teleskopoptik.

## Claims

1. A method of optically assessing a wind power installation (1) or a part thereof, in particular a rotor blade (6), including the steps:
- orienting a camera (32) on to a region to be assessed,
- recording a photograph of the region to be assessed with the camera (32),
- detecting the position of the photographed region with a position detecting device having an angle detection device, wherein at least one orientation angle of the camera and/or the telescopic optical system in relation to a reference orientation is detected, and
- associating the ascertained position with the photographed region,
- detecting at least one dimension in a longitudinal direction of the part to be assessed from a first reference point to a second reference point of the part,
- recording at least one first reference angle which specifies the orientation angle relative to the first reference point,
- recording at least one second reference angle which specifies the orientation angle relative to the second reference point,
- recording a current orientation angle which specifies the orientation angle relative to the currently assessed region, and
- ascertaining the current position of the currently assessed region, at least in relation to the longitudinal direction of the part, from the current orientation angle, the reference angles and optionally the dimension in the longitudinal direction.

2. A method according to claim 1 **characterised in that** a camera (32) with telescopic optical system is used and the region to be assessed is optically magnified for recording a photograph by means of the telescopic optical system.

3. A method according to claims 1 or 2 **characterised in that** a rotor blade (6) having a rotor blade root (20) and a rotor blade tip (12) is assessed and the rotor blade (6) and the camera (32) are so oriented relative to each other that the same distance is set between the camera (32) and the rotor blade root (14) on the one hand and between the camera (32) and the rotor blade tip (12) on the other hand and/or a longitudinal axis of the rotor blade (6) is perpendicular to an optical axis between the camera (32) and a central region (16) of the rotor blade (6).

4. A method according to one of the preceding claims **characterised by** the step:
- storing the current orientation angle and/or the ascertained current position in a table together with data of the recorded assessment, in particular together with the recorded photograph and/or an identification code of the recorded photograph.

5. A method according to one of the preceding claims **characterised in that** a rotor blade is assessed and the first reference point is defined in the root region of the rotor blade and the second reference point is defined at the tip of the rotor blade.

6. A method according to one of the preceding claims **characterised in that** to ascertain the position of the photographed region there is provided a projection device (30) having a projection surface (36) for projecting a position corresponding to the assessed region on to the projection surface (36) by the orientation of the camera (32).

7. A method according to one of the preceding claims **characterised in that** the camera (32) has a lighting means, in particular a laser pointer, to give light on to a or the projection surface (36) in dependence on the orientation of the camera (32) so that a light dot or light spot becomes visible on the projection surface (36).

8. A method according to one of the preceding claims **characterised in that** a or the projection surface (36) is scaled by means of a scaling plotted on an elastic band, wherein the elastic band is stretched for scaling of the projection surface (36) to a distance to be scaled.

9. An assessment apparatus (30) for optical assessment of a rotor blade (6) of a wind power installation (1) including
- a camera (32) for recording a respective photograph of a region to be assessed of the rotor blade (6),
- an orientation device connected to the camera (32) for orientation of the camera (32) on to the region to be assessed,
- a position detection device for detection of the position of the region to be assessed
a data processing device for associating the photograph of the region to be assessed with the detected position of the region to be assessed,
wherein the orientation device has at least an electronic control and a motor drive for automated orientation of the camera (32) and the orientation device is coupled to a or the data processing device to be controlled by the data processing device, and
wherein the position detection device includes an angle detection means for recording at least one orientation angle of the camera,
wherein the assessment apparatus is adapted
- to detect at least one dimension in a longitudinal direction of the part to be assessed from a first reference point to a second reference point of the part,
- to record at least one first reference angle which specifies the orientation angle relative to the first reference point,
- to record at least one second reference angle which specifies the orientation angle relative to the second reference point,
- to record a current orientation angle which specifies the orientation angle relative to the currently assessed region, and
- to ascertain the current position of the currently assessed region, at least in relation to the longitudinal direction of the part, from the current orientation angle, the reference angles and optionally the dimension in the longitudinal direction.

10. An assessment apparatus according to claim 9 **characterised in that** the camera (32) is fitted with a telescopic optical system, in particular a telescope, for optical magnification of the region to be assessed prior to taking a photograph.

11. An assessment apparatus according to claim 9 or claim 10 **characterised in that** the position detection device is in the form of a projection device (34) having a projection surface (36) and optionally has a lighting means connected to the camera (32), in particular a laser pointer, for producing a light spot or light dot on the projection surface (36) at a position corresponding to the position of the region to be assessed.

12. An assessment apparatus according to one of claims 9 to 11 including a data processing device for storing the photograph with the associated position or identification data thereof.

13. An assessment apparatus according to one of claims 9 to 12 **characterised in that** a or the data processing device has image processing software for evaluation of a respective photograph of a region to be assessed.

14. An assessment apparatus according to one of claims 9 to 13 **characterised in that** the position detection device includes an angle detection means for recording at least one orientation angle of the or a telescopic optical system.

## Revendications

1. Procédé d'examen visuel d'une éolienne (1) ou d'une partie de celle-ci, en particulier d'une pale de rotor (6), comprenant les étapes suivantes :
- orientation d'une caméra (32) sur une zone à examiner,
- enregistrement d'une photographie de la zone à examiner avec la caméra (32),
- détection de la position de la zone photographiée avec un dispositif de détection de position avec un moyen de détection d'angle en ce qu'au moins un angle d'orientation de la caméra et/ou d'une optique télescopique est détecté par rapport à une orientation de référence, et
- association de la position déterminée à la zone photographiée,
- détection d'au moins une dimension dans un sens longitudinal de la partie à examiner depuis un premier point de référence vers un deuxième point de référence de la partie,
- enregistrement d'au moins un premier angle de référence, qui indique l'angle d'orientation par rapport au premier point de référence,
- enregistrement d'au moins un deuxième angle de référence, qui indique l'angle d'orientation par rapport au deuxième point de référence,
- enregistrement d'un angle d'orientation instantané, qui indique l'angle d'orientation par rapport à la zone examinée de manière instantanée, et
- détermination de la position instantanée de la zone examinée de manière instantanée, au moins par rapport au sens longitudinal de la partie, à partir de l'angle d'orientation instantané, des angles de référence et en option de la dimension dans le sens longitudinal.

2. Procédé selon la revendication 1, **caractérisé en ce qu'**une caméra (32) avec une optique télescopique est utilisée et la zone à examiner est agrandie visuellement au moyen de l'optique télescopique pour enregistrer une photographie.

3. Procédé selon la revendication 1 ou 2, **caractérisé en ce qu'**une pale de rotor (6) avec un pied de pale de rotor (20) et une pointe de pale de rotor (12) est examinée, et que la pale de rotor (6) et la caméra (32) sont orientées l'une par rapport à l'autre de telle sorte que la même distance est réglée d'une part entre la caméra (32) et le pied de pale (14) et d'autre part entre la caméra (32) et la pointe de pale (12), et/ou qu'un axe longitudinal de la pale de rotor (6) est perpendiculaire par rapport à un axe optique entre la caméra (32) et une zone centrale (16) de la pale (6).

4. Procédé selon l'une quelconque des revendications précédentes, **caractérisé par** l'étape de
- mémorisation de l'angle d'orientation instantané et/ou de la position instantanée déterminée dans un tableau, conjointement avec des données de l'examen enregistré, en particulier conjointement avec la photographie enregistrée et/ou un code d'identification de la photographie enregistrée.

5. Procédé selon l'une quelconque des revendications précédentes, **caractérisé en ce qu'**une pale de rotor est examinée et le premier point de référence est défini dans la zone de pied de la pale de rotor et le deuxième point de référence est défini au niveau de la pointe de pale de la pale de rotor.

6. Procédé selon l'une quelconque des revendications précédentes, **caractérisé en ce qu'**un dispositif de projection (30) avec une surface de projection (36) est prévu pour déterminer la position de la zone photographiée aux fins de la projection sur la surface de projection (36) par l'orientation de la caméra (32) une position correspondant à la zone examinée.

7. Procédé selon l'une quelconque des revendications précédentes, **caractérisé en ce que** la caméra (32) présente un moyen luminescent, en particulier un pointeur laser, afin d'envoyer de la lumière sur une ou la surface de projection (36) en fonction de l'orientation de la caméra (32) de sorte qu'un point lumineux ou une tache lumineuse est visible sur la surface de projection (36).

8. Procédé selon l'une quelconque des revendications précédentes, **caractérisé en ce qu'**une ou la surface de projection (36) est graduée au moyen d'une graduation appliquée sur une bande élastique, dans lequel la bande élastique est étirée sur un tronçon à graduer pour graduer la surface de projection (36) .

9. Dispositif d'examen (30) servant à examiner de manière visuelle une pale de rotor (6) d'une éolienne (1), comprenant :
- une caméra (32) servant à enregistrer respectivement une photographie d'une zone à examiner de la pale de rotor (6),
- un dispositif d'orientation relié à la caméra (32) servant à orienter la caméra (32) sur la zone à examiner,
- un dispositif de détection de position servant à détecter la position de la zone à examiner,
un système de traitement de données servant à associer la photographie respective de la zone à examiner respectivement à la position détectée de la zone à examiner,
dans lequel le dispositif d'orientation présente au moins une commande électronique et un entraînement motorisé servant à orienter de manière automatisée la caméra (32) et le dispositif d'orientation est couplé au système de traitement de données pour être piloté par le système de traitement de données, et
dans lequel le dispositif de détection de position comprend un moyen de détection d'angle servant à enregistrer au moins un angle d'orientation de la caméra,
dans lequel le dispositif d'examen est mis au point
- pour détecter au moins une dimension dans un sens longitudinal de la partie à examiner depuis un premier point de référence vers un deuxième point de référence de la partie,
- pour enregistrer au moins un premier angle de référence, qui indique l'angle d'orientation par rapport au premier point de référence,
- pour enregistrer au moins un deuxième angle de référence, qui indique l'angle d'orientation par rapport au deuxième point de référence,
- pour enregistrer un angle d'orientation instantané, qui indique l'angle d'orientation par rapport à la zone examinée de manière instantanée, et
- pour déterminer la position instantanée de la zone examinée de manière instantanée, au moins par rapport au sens longitudinal de la partie, à partir de l'angle d'orientation instantané, aux angles de référence et en option de la dimension dans le sens longitudinal.

10. Dispositif d'examen selon la revendication 9, **caractérisé en ce que** la caméra (32) est équipée d'une optique télescopique, en particulier d'un télescope, servant à agrandir visuellement la zone à examiner avant l'enregistrement d'une photographie.

11. Dispositif d'examen selon la revendication 9 ou 10, **caractérisé en ce que** le dispositif de détection de position est réalisé en tant que dispositif de projection (34) avec une surface de projection (36) et présente en option un moyen luminescent relié à la caméra (32), en particulier un pointeur laser, pour générer une tache lumineuse ou un point lumineux sur la surface de projection (36) au niveau d'une position correspondant à la position de la zone à examiner.

12. Dispositif d'examen selon l'une quelconque des revendications 9 à 11, comprenant un système de traitement de données servant à sauvegarder la photographie avec la position associée ou des données d'identification de celle-ci.

13. Dispositif d'examen selon l'une quelconque des revendications 9 à 12, **caractérisé en ce qu'**un ou le système de traitement de données présente un logiciel de traitement d'images servant à évaluer respectivement une photographie d'une zone à examiner.

14. Dispositif d'examen selon l'une quelconque des revendications 9 à 13, **caractérisé en ce que** le dispositif de détection de position comprend un moyen de détection d'angle servant à enregistrer au moins un angle d'orientation de l'optique ou d'une optique télescopique.
